# EUROPÄISCHE PATENTSCHRIFT

(11) **EP 1 161 362 B1**
(45) Veröffentlichungstag und Bekanntmachung des Hinweises auf die Patenterteilung: **02.07.2003**
(21) Anmeldenummer: 00912387.8
(22) Anmeldetag: 22.02.2000
(51) Int. Cl.: B60R 21/20, B26D 3/08

(54) **AUFREISSLINIE IN ABDECKUNGEN VON AIRBAGEINHEITEN**
TEAR-OFF STRIP IN COVERINGS OF AIRBAG UNITS
LIGNE DE POINTILLES PRATIQUEE DANS LES COUVERCLES D'UNITES SACS GONFLABLES

(30) Priorität: 01.03.1999 DE 19910141
(43) Veröffentlichungstag der Anmeldung: 12.12.2001
(73) Patentinhaber: Takata-Petri AG, 63743 Aschaffenburg (DE)
(72) Erfinder: REH, Stefan, D-63939 Wörth (DE); SAUER, Konrad, D-63743 Aschaffenburg (DE); ROOS, Peter, D-63834 Sulzbach (DE)
(74) Vertreter: Baumgärtel, Gunnar, Dr.
(86) Internationale Anmeldenummer: DE0000554
(87) Internationale Veröffentlichungsnummer: WO00051851

(56) Entgegenhaltungen:
- EP-A- 0 428 935
- WO-A-00/32368
- WO-A-97/03866
- CA-A- 2 205 284
- DE-A- 4 409 405
- DE-A- 4 424 686
- DE-U- 29 813 528

## Beschreibung

Die Erfindung betrifft ein Verfahren zur Herstellung von Aufreißlinien in Airbagabdeckungen nach dem Oberbegriff des Anspruchs 1.

Üblicherweise werden Airbageinheiten, die neben einem zusammengefalteten Gassack auch einen Gasgenerator umfassen, unter einer Abdeckung in einem Armaturenbrett, einer Lenkradnabenabdeckung, einem Sitz oder einer Türverkleidung untergebracht. Die Abdeckung darf dabei einerseits im Crashfall die Entfaltung des Gassackes nicht wesentlich verzögern bzw. erschweren, soll aber andererseits auch den jeweiligen ästhetischen Gesamteindruck des Fahrzeuginnenraumes nicht beeinträchtigen. Insbesondere soll die Airbageinheit für den Insassen nicht sichtbar sein.

Vielfach werden aufwendige Klappen- oder Türmechanismen eingesetzt, die aber die Kosten für Airbageinheiten in unerwünschter Weise erhöhen ohne eine freie Gestaltung zu ermöglichen.

Aus Kostengründen vorteilhafter ist das Vorsehen sogenannter Aufreißlinien in den Abdeckungen des Fahrzeuginnenraumes, wie Lenkradnabenabdeckung oder Türverkleidung, bzw. der Airbagabdeckung selber. Dabei handelt es sich linienförmige Materialschwächungen, die durch den sich entfaltenden Gassack aufgerissen werden und dann eine Öffnung für den Gassack freigeben.

Die bekannten Verfahren zur Herstellung solcher Aufreißlinien sind vielfältig, im allgemeinen werden sie durch Einritzen oder Schneiden des Materials erzeugt.

So schlägt die EP 646 499 B1 eine Fahrzeuginstrumententafel vor, die eine innenliegende starre Verkleidungstafel und eine darüberliegende Kunststoffschaumschicht mit einer diese überziehenden Außenhaut umfaßt. Aus dieser Instrumententafel wird mittels spanender Verfahren oder Laser nach der Herstellung des Verbundes ein über der Airbageinheit liegender Deckel partiell oder komplett ausgeschnitten, wobei die Kunststoffschaumschicht nicht durchbrochen wird. Die Trennfuge soll unter einem solchen Winkel eingebracht werden, daß der Deckel von außen belastbar ist. Nachteilig an dieser Aufreißkante ist, daß die Außenhaut dem Aufreißen keinen zu hohen Widerstand entgegensetzten darf, also z. B. lederbezogene Abdeckungen so nicht realisierbar sind, da keine definierte Schwächung der Außenhaut möglich ist.

Aus der EP 749 872 A2 sind eine Airbagabdeckung und ein Verfahren zu ihrer Herstellung bekannt geworden, bei dem eine Dekorschicht aus Außenhaut und Absperrschicht erhitzt wird, gegebenenfalls durch Vakuumformung eine Vertiefung in die Außenhaut eingebracht wird, eine Innenschicht auf der Dekorschicht aufgebracht und eine zweite Vertiefung in die Innenschicht eingebracht wird. Die Innenschicht wird durch Spritzguß hergestellt. Die Vertiefung wird mit einem Ultraschall- oder Hochfrequenzschweißgerät, einem Heißmesser oder einem Hochfrequenzmesser in die Innenschicht geschnitten. Auch dieses Verfahren erlaubt keine für den Insassen unsichtbare definierte Schwächung der Außenhaut und ist deshalb in der Gestaltungsmöglichkeit für die Abdeckung in unerwünschter Weise begrenzt.

Die DE 44 09 405 A1 und die gattungsbildende DE-A-44 24 686 offenbaren ein Verfahren zur Herstellung einer Airbagabdeckung, die eine innere Formschicht aus relativ hartem Polymermaterial und eine äußere Schicht aus relativ weichem Polymermaterial umfaßt, wobei die Abdeckung hergestellt wird und anschließend eine Reißlinie von der inneren Formschicht aus in die Abdeckung geschnitten wird, so daß die Reißlinie die innere Formschicht vollständig durchdringt, wobei eine Schneidtechnik verwendet wird, die keinen Druck auf die Abdeckung ausübt. Als Schneidtechnik kommen Laserverfahren, Ultraschall- oder Heißmesser in Betracht. Diese Schneidtechniken haben den Nachteil, daß sie mit einer hohen thermischen Belastung des Materials der Abdeckung verbunden sind. Auch eine Kontrolle der Schnittiefe ist nur schwer möglich.

Es wurden auch Verfahren vorgeschlagen, bei denen die Dekorschicht getrennt von der bzw. den inneren Schichten geschnitten wird. Die Trennfugen als Reißlinien in den Trägerschichten werden dabei zum Teil gleich bei deren Herstellung durch entsprechende Spritzformen vorgesehen. Durch diese getrennte Einbringung der Aufreißlinien in die Teile der Abdeckung ergibt sich aber der Nachteil einer aufwendigen Positionierung der Einzelteile der Abdeckung zueinander.

Der vorliegenden Erfindung liegt die Aufgabe zugrunde, ein Verfahren zur Herstellung von Airbagabdeckungen zu schaffen, das mit einfachen Mitteln die Herstellung von Aufreißlinien mit definierter Schnittiefe in einer Abdeckung ermöglicht.

Diese Aufgabe wird durch eine Verfahren zur Herstellung von Aufreißlinien in Airbagabdeckungen mit den Merkmalen des Patentanspruchs 1 gelöst.

Dabei wird zuerst die Abdeckung aus den gewünschten Schichten, wie z. B. Dekorschicht, Trägerschicht etc., hergestellt und anschließend werden die Aufreißlinien von der Innenseite her in die Abdeckung geschnitten, ohne diese zu durchdringen, wozu die Abdeckung in eine Schneidaufnahme eingebracht wird und die Aufreißlinien mittels einer Schneide in die Abdeckung geschnitten werden.

Als Schneide eignet sich insbesondere eine skalpellartige Klinge. Diese ermöglicht ein Schneiden ohne thermische Belastungen des Abdeckungsmaterials, wodurch sich das Verfahren besonders vorteilhaft bei bezogenen oder umlederten Airbagabdeckungen anwenden läßt. Schädigungen des Materials durch Verbrennen oder Schmelzen sind ausgeschlossen, und es entstehen keine Verwerfungen an Kunststoffteilen.

Erfindungsgemäß werden hierbei die Schnittiefe und die Position der Schneide relativ zu der Schneidaufnahme (und nicht zu der Abdeckung) gesteuert. Dazu wird die Abdeckung zweckmäßigerweise während des Schneidvorgangs durch eine definierte Kraft in der Schneidaufnahme festgelegt.

Durch die Steuerung der Schnittiefe relativ zu der Schneidaufnahme ist gewährleistet, daß unabhängig von Materialtoleranzen einzelner Schichten der Abdeckung immer eine definierte Restdicke der Abdeckung erreicht wird, da die Abdeckung mit ihrer äußeren Begrenzung in der Schneidaufnahme festgelegt ist. Ein unerwünschtes Durchdringen der äußeren Dekorschicht wird ebenso vermieden wie eine zu geringe Schwächung des Materials, die im ungünstigsten Fall zu einem Versagen der Airbageinheit führen könnte. Insgesamt ergibt sich durch das erfindungsgemäße Verfahren eine sichere, weil prozeßüberwachte Schnittiefe. Somit eignet sich das Verfahren auch für umlederte oder sonst bezogene Airbagabdeckungen.

Vorzugsweise wird die Abdeckung in der Schneidaufnahme mittels Vakuum angesaugt oder durch eine definierte Kraft in diese gedrückt, wobei der von der Schneide ausgeübte Druck diese definierte Kraft darstellen kann.

Die Aufnahme kann vorteilhaft durch Abgießverfahren als Negativ der Airbagabdeckung hergestellt werden, so daß die Kontur der Abdeckung und der Schneidaufnahme einander sehr genau entsprechen.

Die Aufreißlinien sind für den Insassen unsichtbar, da sich die Schnittkanten sofort gegenseitig abstützen. Es entsteht kein Abfall, auch keine Abgase wie beim Schneiden mit einem Laser oder Heißmesser. Ferner läßt sich der Energieaufwand bei der Herstellung der Aufreißlinien durch die Verwendung einer Schneidklinge erheblich reduzieren.

Material und Gestaltung der Abdeckung sind weitgehend frei variierbar. Die Abdeckung kann beispielsweise aus einem gegebenenfalls geschäumten Kunststoff bestehen.

In einer bevorzugten Ausführungsform ist die Trägerschicht aus Kunststoff in der 2-Komponenten Technik herstellbar, die mit einer Dekorschicht aus Leder bezogen ist.

Weiterhin ist es möglich, die Trägerschicht aus geschäumtem Kunststoff herzustellen oder eine Zwischenschicht aus geschäumtem Kunststoff, z. B. Polyurethan, vorzusehen.

Üblicherweise richtet sich die Gestaltung der Abdeckung nach dem Design des übrigen Fahrzeuginnenraums und ist an diesen angepaßt. Durch die gemäß der vorliegeneden Erfindung verwendbaren, schonenden Schneidtechniken bestehen in dieser Hinsicht keinerlei Beschränkungen hinsichtlich der zu schneidenden Materialien.

Die Anzahl und Form der Aufreißlinien ist ebenso variabel an die jeweiligen Bedürfnisse anpaßbar. So sind neben einer einzigen gerade verlaufenden Aufreißlinie beispielsweise H-förmige oder sternförmige Aufreißlinien möglich. Die einzelenen Aufreißlinien können einen beliebigen Verlauf aufweisen, auch Kurven und gekrümmte Linien sind ohne weiteres herstellbar.

Die Steuerung der Schneide in der Schneidaufnahme, in der die Abdeckung festgelegt ist, kann mit bekannten Mitteln, z. B. über Computer, erfolgen die hier nicht näher beschrieben werden müssen.

In einer bevorzugten Ausführungsform wird die ebenfalls in Bezug auf die Schneidaufnahme gesteuerte Schnittiefe entlang der Erstreckung der Aufreißlinien variiert, d. h. die Schnittiefe ist im Verlauf einer Aufreißlinie unterschiedlich.

Vorzugsweise ist die Schnittiefe in der Mitte einer Aufreißlinie größer als an deren Enden, zu denen hin die Schnittiefe kontinuierlich oder abrupt auf null abnimmt. Besonders bevorzugt nimmt die Schnittiefe von der Mitte einer Aufreißlinie zu den Enden hin kontinuierlich ab. Dadurch reißt die Abdeckung bei der Entfaltung des Gaskissens leicht und schnell auf; ein Weiterreißen über die Enden der Aufreißlinie hinaus wird aber durch die abnehmende Schnittiefe verhindert.

Die Schnitte bzw. Trennfugen als solche können nicht nur senkrecht zu der Oberfläche der Abdeckung sondern auch in einem beliebigen Winkel dazu hergestellt werden. Dadurch kann der Aufreißvorgang über die Winkel der Schnitte positiv beeinflußt werden.

Eine Vorrichtung zur Durchführung des erfindungsgemäßen Verfahrens umfaßt eine Schneide, eine Schneidaufnahme und eine Steuerung, mittels derer die Schnittiefe und die Position der Schneide relativ zu der Schneidaufnahme gesteuert werden.

Vorzugsweise sind Mittel zur Festlegung der Abdeckung in der Schneidaufnahme vorgesehen, z. B. ein Vakuumerzeuger durch den die Abdeckung in der Schneidaufnahme angesaugt wird.

Besonders vorteilhaft ist die Verwendung einer skalpellartigen Klinge als Schneide. In einer bevorzugten Ausführungsform erfolgt der Schneidvorgang durch eine oszillierende Bewegung der Schneide.

Es ist zweckmäßig, die Schneide nach jedem Schneidvorgang einer Airbagabdeckung auf Veränderungen der Klingengeometrie optisch zu kontrollieren, da die definierte Klingengeometrie ein wesentlicher Faktor für die Prozeßsicherheit ist. Alternativ kann die Klingengeometrie z. B. auch durch Probeschnitte kontrolliert werden.

Weiterhin ist es möglich, Veränderungen der Klingengeometrie über die für den Schneidvorgang aufzuwendende Kraft durch geeignete Sensoren an der Halterung der Schneide zu erfassen.

Für empfindliche Werkstoffe der Abdeckung kann auch eine Temperierung der Schneidaufnahme vorgesehen werden.

Die Erfindung soll anhand der beigefügten Figuren näher erläutert werden.

Es zeigt
- Figur 1:: eine schematische Darstellung einer Vorrichtung zum Schneiden von Aufreißlinien in einer Airbagabdeckung mit Schneidaufnahme, Schneide und der zu scheidenden Airbagabdeckung;
- Figur 2:: einen Längsschnitt durch einen Teil einer Airbagabdeckung für eine Lenkradairbageinheit;
- Figur 3:: einen Querschnitt entlang der Linie A-A in Fig. 4;
- Figur 4:: einen Längsschnitt durch einen Teil einer weiteren Airbagabdeckung für eine Lenkradairbageinheit;
- Figur 5:: einen Querschnitt durch einen Teil einer Airbagabdeckung aus geschäumtem bzw. 1-Komponenten Kunststoff, die nicht durch das erfindungsgemäße Verfahren hergestellt ist.
- Figur 6:: einen Querschnitt durch einen Teil einer Airbagabdeckung aus Trägerschicht und Dekorschicht, die in der 2-Komponenten Technik hergestellt ist;
- Figur 7:: einen Querschnitt durch einen Teil einer Airbagabdeckung aus Kunststoff, die mit Leder bezogen ist;
- Figur 8:: einen Querschnitt durch einen Teil einer lederbezogenen Airbagadeckung mit einer polsternden Zwischenschicht.

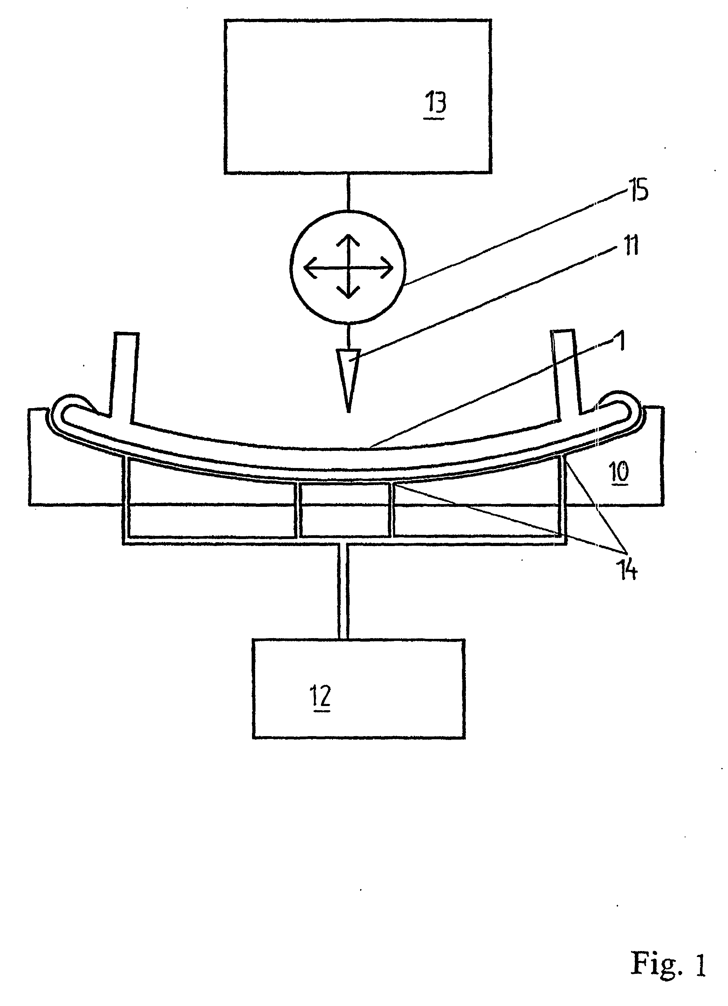

Die in der Figur 1 dargestellte Vorrichtung zur Durchführung des erfindungsgemäßen Verfahrens besteht im wesentlichen aus einer Schneidaufnahme 10, einer in einer Halterung 15 angeordneten Schneide 11 und einer Steuerung 13. Die Position der Halterung und Führung 15 der Schneide 11 wird von der Steuerung 13 erfaßt und entsprechend vorbestimmter Parameter eingestellt.

Zur Festlegung einer Airbagabdeckung 1 in der Schneidaufnahme 10 wird über Öffnungen 14 ein von einem Vakuumerzeuger 12 erzeugter Unterdruck angelegt. Die Öffnungen 14 können auch in Bereiche münden, die gegenüber der Kontur der Aufnahme 10 etwas zurüchgesetzt sind, um die Fläche, an der das Vakuum wirken kann, zu vergrößern.

Mit der gezeigten Vorrichtung ist bei Verwendung des eingangs beschriebenen erfindungsgemäßen Verfahrens eine vollautomatische und präzise Herstellung von Aufreißlinien 2 in einer Airbagabdeckung 1 möglich. Die Vorrichtung ist durch einen einfachen Wechsel der Schneidaufnahme 10 schnell und günstig an unterschiedliche Abdeckungen 1 anpaßbar.

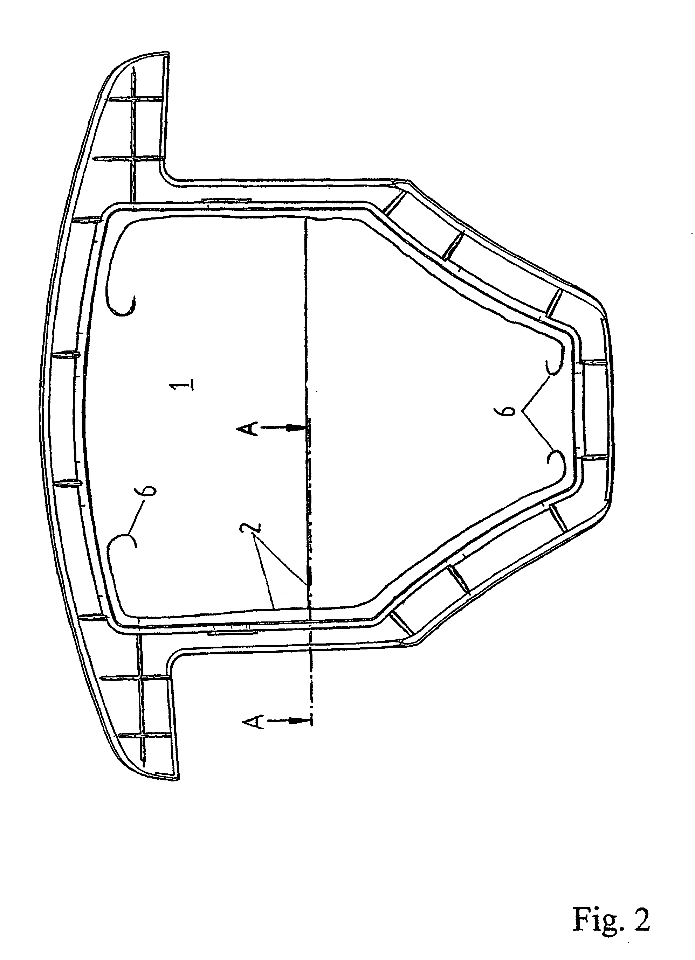

In der Figur 2 ist ein Längsschnitt durch eine erfindungsgemäß hergestellte Airbagabdeckung 1 gezeigt. Man erkennt die an ein Lenkrad angepaßte Form der Abdeckung 1.

Bei der Herstellung dieser Abdeckung 1 wird zunächst die Abdeckung 1 aus Kunststoff gespritzt. Eine typische Dicke der Abdeckung liegt im Bereich von 1.5 mm bis 5.0 mm und richtet sich nach der Fertigungstechnologie. Sie ist bei geschäumten Kunststoffen zumeist größer.

Anschließend wird die Abdeckung 1 in eine hier nicht gezeigte Schneidaufnahme der in Fig. 1 dargestellten Art eingebracht und, z. B. mittels Vakuum, darin festgelegt.

Dann werden Aufreißlinien 2 von der Unterseite der Abdekkung 1 her mit einer skalpellartigen Klinge in den Kunststoff eingeschnitten. Die Schnittiefe der Aufreißlinien 2 wird bezüglich definierter Punkte der Scheidaufnahme so eingestellt, daß die Restdicke der Abdeckung 1 etwa 0.3 mm bis 1.5 mm beträgt. Auch der Verlauf der Aufreißlinien 2 wird relativ zu der Schneidaufnahme gesteuert.

Die Aufreißlinie 2 hat in diesem Fall einen in etwa H-förmigen Verlauf, so daß sich bei der Entfaltung eines darunter liegenden Gaskissens, das hier nicht dargestellt ist, die Abdeckung 1 ähnlich einer Doppeltür öffnen kann, sobald die Abdeckung 1 entlang der Aufreißlinien 2 gerissen ist. Zur Vermeidung eines vollständigen Abreißens der Abdeckung 1 durch ein unkontrolliertes Weiterreißen verläuft die Aufreißlinie 2 an ihren Enden 6 halbkreisförmig.

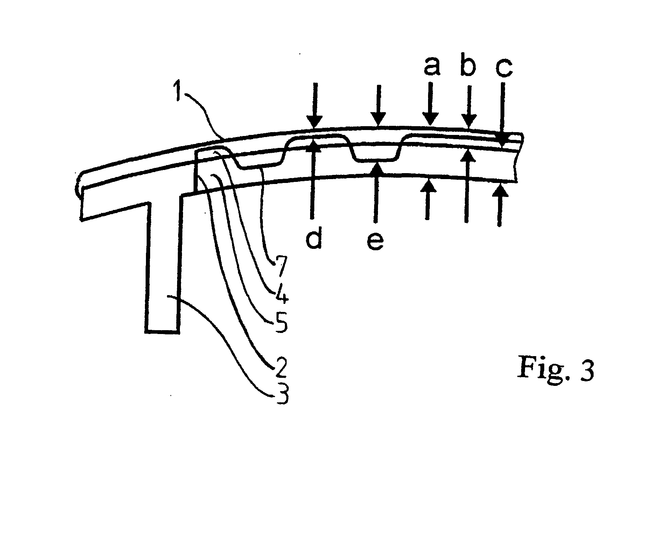

Die Figur 3 zeigt einen Schnitt entlang der Linie A-A aus Figur 2. Es ist erkennbar, daß die Aufreißlinie 2 in der Abdeckung 1 mit der Gesamtdicke a sich durch die Trägerschicht 5 mit der Dicke c hindurch in die Dekorschicht 4 mit der Dicke b erstreckt. Unabhängig von materialbedingten Schwankungen der Dicke der einzelnen Schichten wird die Schnittiefe so gesteuert, daß sich eine konstante Restdicke d der Abdeckung 1 ergibt.

In diesem Fall wurde zusätzlich die Schnittiefe entlang der Aufreißkante 2 variiert, so daß Stege 7 mit einer Dicke e, die größer als die Restdicke d aber kleiner als die Gesamtdicke a der Abdeckung 1 ist, vorhanden sind. Typische Stegdicken e betragen etwa 1.0 bis 3.0 mm. Die Stege stabilisieren die geschnittenen Bereiche zueinander.

Über die Stege 7 läßt sich das Aufreißverhalten entlang der Aufreißlinie 2 gezielt steuern. Hier wird durch die Stege 7 ein Ausreißen der Abdeckung 1 im Bereich des Übergangs von der waagerechten Linie des "H" zu den senkrechten Linien verhindert.

Mit dem erfindungsgemäßen Verfahren läßt sich somit das Aufreißverhalten für die jeweiligen Erfordernisse maßschneidern.

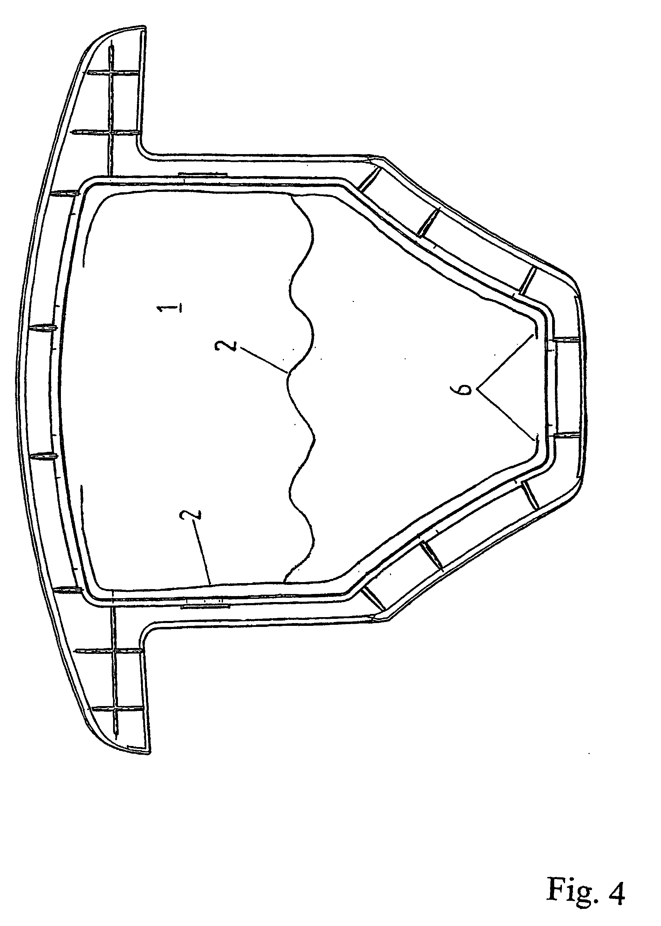

In Figur 4 ist eine weitere Anordnung von Aufreißlinien 2 in einer Airbagabdeckung 1 gezeigt. In dieser Ausführungsform ist eine wellenförmige Aufreißlinie 2 vorgesehen. Durch diese Gestaltung der Aufreißlinie wird die Stabilität gegen ein Durchdrücken bei Belastung der Abdeckung von außen erhöht.

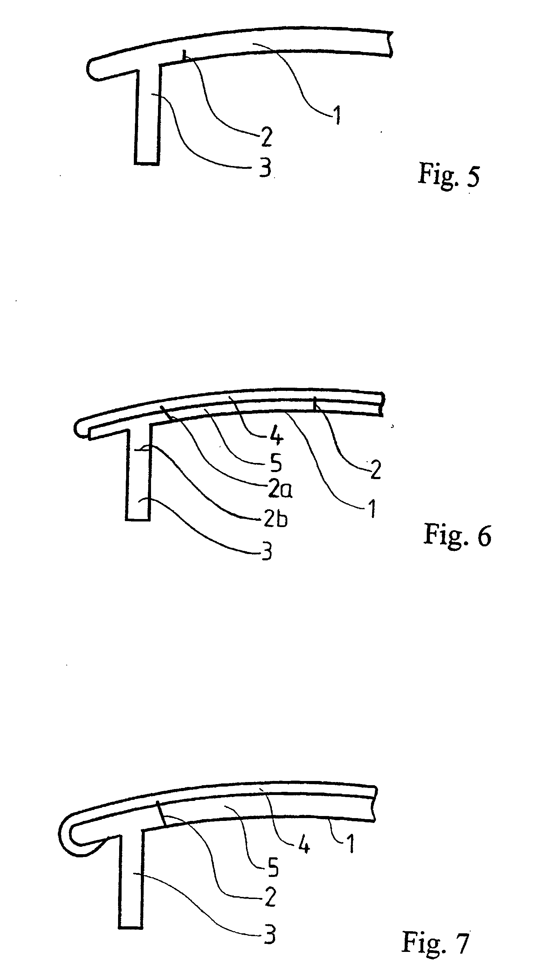

In Figur 5 ist ein Querschnitt durch einen Teil einer weiteren Abdeckung 1 für eine nicht dargestellte Airbageinheit gezeigt. Das Beispiel der Figur 5 stellt keine Ausführungsform einer durch das erfindungsgemäße Verfahren hergestellten Abdeckung dar. Sie dient lediglich dem besseren Verständnis der Erfindung. Die Abdeckung 1 wird als Ganzes aus geschäumtem oder gespritztem 1-Komponenten Kunststoff hergestellt. Die Dicke der Abdeckung 1 beträgt typischerweise etwa 1.5 bis 5.0 mm.

Die Schnittiefe der Aufreißlinien 2 wird so eingestellt, daß die Restdicke der Abdeckung etwa 0.3 bis 1.5 mm beträgt. Vorteilhafterweise nimmt die Schnittiefe von der Mitte der Aufreißlinien zu deren Ende hin auf 0 mm ab.

Die Abdeckung 1 umfaßt darüber hinaus Befestigungsmittel 3, über die sie beispielsweise an einer Lenkradnabe oder der Airbageinheit selbst befestigbar ist.

Figur 6 zeigt einen Querschnitt durch einen Teil einer Abdeckung 1, die aus einer Dekorschicht 4 und einer Trägerschicht 5 besteht. Die Aufreißlinie 2a ist in einem (von 90° bezüglich der Ersteckungsrichtung der Abdeckung abweichenden Winkel) schräg in die Abdeckung 1 eingeschnitten. Dadurch wird eine auf die Oberfläche der Abdeckung 1 ausgeübte Kraft seitlich abgeleitet und ein Eindrücken der Abdeckung 1 verhindert. Zur Verbesserung der Stabilität können auch Aufreißlinien 2b in dem Befestigungsmittel 3 anstelle der Aufreißlinien 2a vorgesehen sein.

Die Abdeckung 1 wird in der 2-Komponenten Technik hergestellt und anschließend erfindungsgemäß durch Einbringen in eine Schneidaufnahme und Schneiden mit einer skalpellartigen Klinge mit den Aufreißlinien 2 versehen. Damit ist eine besonders kostengünstige und zeitsparende Herstellung möglich.

Die Dekorschicht 4 ist üblicherweise etwa 1.0 bis 2.5 mm und die Trägerschicht 5 etwa 1.5 bis 2.5 mm dick. Die Gesamtdicke der Abdeckung 1 liegt im allgemeinen im Bereich von 2.5 bis 5.0 mm.

Figur 7 zeigt eine dritte Variante einer Airbagabdeckung 1, bei der das erfindungsgemäße Herstellverfahren besonders vorteilhaft anwendbar ist. Diese Abdeckung 1 umfaßt als Dekorschicht 4 einen Bezug aus Leder. Die Trägerschicht 5 kann dabei je nach Wunsch aus Kunststoff oder geschäumtem Kunststoff bestehen. Auch diese Abdeckung 1 wird erfindungsgemäß erst dann mit den Aufreißlinien 2 versehen, wenn die Trägerschicht 5 mit der Dekorschicht 4 bezogen ist. Typischerweise hat der Bezug, also die Dekorschicht 4, eine Dicke von etwa 0.6 bis 2.0 mm, und die Trägerschicht 5 ist etwa 1.5 bis 2.5 mm dick. Die Dicke der Abdeckung 1 beträgt etwa 2.1 bis 4.5 mm.

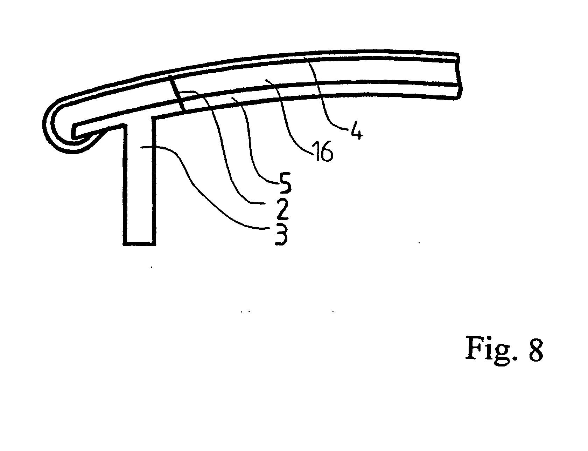

In Figur 8 ist eine bevorzugte Ausführungsform einer erfindungsgemäßen Airbagabdeckung 1 gezeigt, bei der zwischen der Trägerschicht 5 und der Dekorschicht 4 in Form eines Lederbezuges noch eine Zwischenschicht 16 vorgesehen ist. Die Zwischenschicht 16 besteht vorzugsweise aus geschäumtem Kunststoff oder einem Elastomer und kann zweckmäßig in der 2-Komponenten Technik mit der Trägerschicht 5 zusammen hergestellt werden. Die Zwischenschicht 16 wirkt als Polster.

Diese Art Abdeckungen bereitete bisher große Probleme beim Schneiden, da eine definierte Schwächung der Dekorschicht aus dem schwer schneidbaren Leder durch die Träger- und Zwischenschicht hindurch kaum möglich war. Durch das erfindungsgemäße Verfahren der Steuerung der Schneide über die Schneidaufnahme sind diese Probleme gelöst.

### Bezugszeichenliste

- 1.: Airbagabdeckung
- 2.: Aufreißlinie
- 3.: Befestigungsmittel
- 4.: Dekorschicht
- 5.: Trägerschicht
- 6.: Ende der Aufreißlinie
- 7.: Steg
- 10.: Schneidaufnahme
- 11.: Schneide
- 12.: Vakuumgenerator
- 13.: Steuerung
- 14.: Öffnung
- 15.: Halterung
- 16.: Zwischenschicht

## Patentansprüche

1. Verfahren zur Herstellung von Aufreißlinien in einer eine Trägerschicht (5) und eine Dekorschicht (4) aufweisenden Airbagabdeckung (1), die beim Auslösen einer Airbageinheit eine Öffnung freigeben, durch die hindurch sich ein Gassack entfalten kann, wobei zunächst die Abdeckung (1) hergestellt wird und anschließend die Aufreißlinien (2) von innen in beide Schichten (4, 5) der Abdeckung (1) geschnitten werden, ohne die Abdeckung (1) zu durchdringen,
**dadurch gekennzeichnet,**
**daß** die Trägerschicht (5) mit einer aus Leder bestehenden Dekorschicht (4) bezogen ist, daß die Abdeckung (1) in eine Schneidaufnahme (10) eingebracht wird und daß die Aufreißlinien (2) mittels einer Klinge (11) in die Abdeckung (1) geschnitten werden, wobei die Schnittiefe und die Position der Schneide (11) relativ zu der Schneidaufnahme (10) gesteuert werden.

2. Verfahren nach Anspruch 1, **dadurch gekennzeichnet, daß** die Abdeckung (1) während des Schneidvorgangs mittels einer definierten Kraft in der Schneidaufnahme (10) festgelegt wird.

3. Verfahren nach Anspruch 2, **dadurch gekennzeichnet, daß** die Abdeckung (1) in der Schneidaufnahme (10) angesaugt wird.

4. Verfahren nach Anspruch 2, **dadurch gekennzeichnet, daß** die Abdeckung (1) durch eine definierte Kraft in die Schneidaufnahme (10) gedrückt wird.

5. Verfahren nach Anspruch 4, **dadurch gekennzeichnet, daß** der von der Schneide (11) auf die Abdeckung (1) ausgeübte Druck die definierte Kraft bildet.

6. Verfahren nach einem der vorhergehenden Ansprüche, **dadurch gekennzeichnet, daß** die Aufreißlinien (2) mit einer oszillierenden Schneide (11) geschnitten werden.

7. Verfahren nach einem der vorhergehenden Ansprüche, **dadurch gekennzeichnet, daß** die Trägerschicht (5) der Abdeckung (1) aus einem Kunststoff, insbesondere einem geschäumten oder einem 1-Komponenten Kunststoff, hergestellt wird.

8. Verfahren nach einem der vorhergehenden Ansprüche, **dadurch gekennzeichnet, daß** die Trägerschicht (5) aus einem thermoplastischen Elastomer, hergestellt und mit Leder als Dekorschicht (4) bezogen wird.

9. Verfahren nach einem der vorhergehenden Ansprüche, **dadurch gekennzeichnet, daß** zwischen der Trägerschicht (5) und der Dekorschicht (4) eine Zwischenschicht (16) angeordnet wird.

10. Verfahren nach Anspruch 9, **dadurch gekennzeichnet, daß** die Zwischenschicht aus weichem, insbesondere aus geschäumtem Kunststoff oder einem Elastomer hergestellt wird.

11. Verfahren nach einem der vorhergehenden Ansprüche, **dadurch gekennzeichnet, daß** die Schnittiefe entlang des Verlaufs einer Aufreißlinie (2) variiert.

12. Verfahren nach Anspruch 11, **dadurch gekennzeichnet, daß** die Schnittiefe an den Enden (6) einer Aufreißlinie (2) geringer als in deren mittlerem Bereich ist.

13. Verfahren nach Anspruch 12, **dadurch gekennzeichnet, daß** die Schnittiefe von der Mitte der Aufreißlinie (2) zu ihren Enden (6) kontinuierlich abnimmt.

14. Verfahren nach einem der vorhergehenden Ansprüche, **dadurch gekennzeichnet, daß** die Aufreißlinie (2) im wesentlichen H-förmig geschnitten wird.

15. Verfahren nach einem der vorhergehenden Ansprüche, **dadurch gekennzeichnet, daß** die Enden (6) der Aufreißlinien (2) halbkreisförmig geschnitten werden.

16. Verfahren nach einem der vorhergehenden Ansprüche, **dadurch gekennzeichnet, daß** die Aufreißlinien (2) wellenförmig geschnitten werden.

## Claims

1. A method for the production of tear lines in an airbag covering (1) comprising a support layer (5) and a decorative layer (4), which tear lines, on the triggering of an airbag unit, expose an aperture through which an airbag can deploy, the covering (1) being produced first and the tear lines (2) subsequently being cut from the interior into the two layers (4, 5) of the covering (1), without penetrating through the covering (1),
**characterized in that**
the support layer (5) is covered by a decorative layer (4) consisting of leather, **in that** the covering (1) is introduced into a cutting receptacle (10) and **in that** the tear lines (2) are cut into the covering (1) by means of a cutter (11), the depth of cut and the position of the cutter (11) being controlled relative to the cutting receptacle (10).

2. The method as claimed in claim 1, **characterized in that** the covering (1) is fixed in the cutting receptacle (10) during the cutting operation by means of a defined force.

3. The method as claimed in claim 2, **characterized in that** the covering (1) is subjected to suction in the cutting receptacle (10).

4. The method as claimed in claim 2, **characterized in that** the covering (1) is pressed into the cutting receptacle (10) by a defined force.

5. The method as claimed in claim 4, **characterized in that** the pressure exerted by the cutter (11) on the covering (1) forms the defined force.

6. The method as claimed in one of the preceding claims, **characterized in that** the tear lines (2) are cut with an oscillating cutter (11).

7. The method as claimed in one of the preceding claims, **characterized in that** the support layer (5) of the covering (1) is produced from a plastic, especially a foamed or a 1-component plastic.

8. The method as claimed in one of the preceding claims, **characterized in that** the support layer (5) is produced from a thermoplastic elastomer and is covered with leather as a decorative layer (4).

9. The method as claimed in one of the preceding claims, **characterized in that** an intermediate layer (16) is disposed between the support layer (5) and the decorative layer (4).

10. The method as claimed in claim 9, **characterized in that** the intermediate layer is produced from a soft, especially from foamed, plastic or an elastomer.

11. The method as claimed in one of the preceding claims, **characterized in that** the depth of cut varies along the course of a tear line (2).

12. The method as claimed in claim 11, **characterized in that** the depth of cut at the ends (6) of a tear line (2) is less than in its central region.

13. The method as claimed in claim 12, **characterized in that** the depth of cut decreases continuously from the center of the tear line (2) to its ends (6).

14. The method as claimed in one of the preceding claims, **characterized in that** the tear line (2) is cut substantially in the shape of an H.

15. The method as claimed in one of the preceding claims, **characterized in that** the ends (6) of the tear lines (2) are cut in a semicircular shape.

16. The method as claimed in one of the preceding claims, **characterized in that** the tear lines (2) are cut with an undulating shape.

## Revendications

1. Procédé de fabrication de lignes de pointillés dans un couvercle de sac gonflable (1) présentant une couche support (5) et une couche décorative (4), couvercle ayant la capacité, au déclenchement d'une unité sac gonflable, de libérer une ouverture à travers laquelle une poche de gaz peut se déployer, dans lequel on fabrique tout d'abord le couvercle (1), puis on découpe de l'intérieur, dans les deux couches (4, 5) du couvercle (1), la ligne de pointillés (2) sans transpercer le couvercle (1),
**caractérisé en ce que**
la couche support (5) est revêtue d'une couche décorative (4) en cuir, **en ce que** le couvercle (1) est introduit dans un guide de coupe (10) et **en ce que** les lignes de pointillés sont découpées dans le couvercle (1) au moyen d'une lame (11), où l'on contrôle la profondeur de coupe et la position de la lame (11) par rapport au guide de coupe (10).

2. Procédé selon la revendication 1 **caractérisé en ce que**, au cours de l'opération de découpe, le couvercle (1) est fixé dans le guide de coupe (10) au moyen d'une force définie.

3. Procédé selon la revendication 2 **caractérisé en ce que** le couvercle (1) subit une aspiration dans le guide de coupe (10)

4. Procédé selon la revendication 2 **caractérisé en ce qu'**une force définie presse le couvercle (1) dans le guide de coupe (10).

5. Procédé selon la revendication 4 **caractérisé en ce que** la pression exercée par la lame (11) sur le couvercle (1) constitue cette force définie.

6. Procédé selon l'une quelconque des revendications précédentes **caractérisé en ce que** la ligne de pointillés (2) est découpée par une lame oscillante (11).

7. Procédé selon l'une quelconque des revendications précédentes **caractérisé en ce** l'on fabrique la couche support (5) du couvercle (1) en employant une matière synthétique, particulièrement une matière synthétique expansée ou monocomposante.

8. Procédé selon l'une quelconque des revendications précédentes **caractérisé en ce** la couche support (5) est fabriquée à partir d'un élastomère thermoplastique et revêtue de cuir en tant que couche décorative.

9. Procédé selon l'une quelconque des revendications précédentes **caractérisé en ce que** l'on dispose une couche intermédiaire (16) entre la couche support (5) et la couche décorative (4).

10. Procédé selon la revendication 9 **caractérisé en ce que** la couche intermédiaire est fabriquée en matière synthétique souple, en particulier en matière synthétique expansée ou à partir d'un élastomère.

11. Procédé selon l'une quelconque des revendications précédentes **caractérisé en ce** la profondeur de coupe varie le long du tracé d'une ligne de pointillés (2).

12. Procédé selon la revendication 11 **caractérisé en ce que** la profondeur de coupe aux extrémités (6) d'une ligne de pointillés (2) est inférieure à celle de la zone du milieu.

13. Procédé selon la revendication 12 **caractérisé en ce que** la profondeur de coupe diminue de façon continue du milieu de la ligne de pointillés (2) aux extrémités (6) de celle-ci.

14. Procédé selon l'une quelconque des revendications précédentes **caractérisé en ce que** la ligne de pointillés (2) est découpée essentiellement en forme de H.

15. Procédé selon l'une quelconque des revendications précédentes **caractérisé en ce que** les extrémités (6) de la ligne de pointillés (2) sont découpées en demi-cercle.

16. Procédé selon l'une quelconque des revendications précédentes **caractérisé en ce que** la ligne de pointillés (2) est découpée en formant une ligne ondulée.
